# EUROPÄISCHE PATENTSCHRIFT

(11) **EP 1 412 090 B1**
(45) Veröffentlichungstag und Bekanntmachung des Hinweises auf die Patenterteilung: **28.06.2006**
(21) Anmeldenummer: 02754416.2
(22) Anmeldetag: 23.07.2002
(51) Int. Cl.: B03C 3/28

(54) **FILTERELEMENT**
FILTER ELEMENT
ELEMENT FILTRANT

(30) Priorität: 30.07.2001 DE 10137161
(43) Veröffentlichungstag der Anmeldung: 28.04.2004
(73) Patentinhaber: helsa-automotive GmbH & Co. KG, 95482 Gefrees (DE)
(72) Erfinder: CZADO, Wolfgang, 95482 Gefrees (DE)
(74) Vertreter: Walcher, Armin
(86) Internationale Anmeldenummer: PCT/DE2002/002705
(87) Internationale Veröffentlichungsnummer: WO 2003/013732

(56) Entgegenhaltungen:
- EP-A- 0 601 278
- DE-A- 3 904 623
- GB-A- 2 329 598
- US-A- 4 143 196
- US-A- 4 886 527

## Beschreibung

Die vorliegende Erfindung betrifft ein Filterelement, wie es insbesondere als Partikelfilter oder als Partikelfilterschicht in einem aus wenigstens einer aus Adsorptionschicht und wenigstens einer Partikelfilterschicht zusammengesetzten Kombinationsfilter bekannt ist.

Partikelfilter werden z.B. als Raumluftfilter, insbesondere aber auch als Kabinenluftfilter im Kraftfahrzeugbereich verwendet. Bei der Verwendung in einem Kombinationsfilter sind die wenigstens eine Partikelfilterschicht und die wenigstens eine Adsorptionsschicht in Strömungsrichtung der Luft hintereinander angeordnet und im allgemeinen plissiert, d.h. zick-zack-förmig gefaltet, um bei möglichst geringer Baugröße eine vergleichsweise große Anströmfläche zu bieten.

Obwohl im Stand der Technik eine Vielzahl von entsprechenden Filterelementen und Kombinationsfiltern beschrieben sind, zeigen die insbesondere bei der Verwendung im Kraftfahrzeugbereich damit in Verbindung stehenden Probleme, die im wesentlichen Fragen der Baugröße und des Druckabfalls am Filter in Verbindung mit der erzielbaren Filterleistung betreffen, daß immer noch Raum für Verbesserungen verbleibt. Verbesserungen sind auch deshalb gefordert, weil die Ansprüche der Verbraucher ständig steigen und in Spezialanwendungen gesetzliche Vorschriften zum Gesundheits- oder Arbeitsschutz ständig verschärft werden. Der Fachmann trachtet daher ständig nach einer Verbesserung der Filterleistungen von Filterelementen und Kombinationsfiltern. Als Beispiel für Partikelfiltermedien, wie sie zur Zeit insbesondere im Kraftfahrzeugbereich eingesetzt werden, ist der in der EP 0 910 454 offenbarte Partikelfilter zu nennen.

Bei solchen Partikelfiltermedien besteht allerdings der Nachteil, daß mit einer Verbesserung der Abscheidungsleistung der Luftwiderstand stark anwächst, wodurch ein Kompromiß zwischen Abscheidungsrate und Luftwiderstand erforderlich ist. D.h. man ist gezwungen eine mäßige Abscheidungsrate in Kauf zu nehmen, um einen akzeptablen Luftwiderstand zu realisieren.

Weitaus schwieriger gestaltet sich dieser Kompromiß bei Kombifiltern, die eine Adsorptionsschicht aufweisen. Die Adsorptionsschicht führt zu einer starken Erhöhung des Luftwiderstandes, so daß man gezwungen ist bei der Abscheidungsleistung der Partikel Abstriche vorzunehmen. Aus diesem Grund liegen Kombifilter in ihren Abscheidungsleistungen häufig deutlich unter den Abscheidungsleistungen von reinen Staubfiltem. Ein solcher Kombifilter für den Kraftfahrzeugbereich ist z.B. Gegenstand der DE 39 04 623.

Der vorliegenden Erfindung liegt die Aufgabe zugrunde wenigstens ein weiteres Filterelement bereitzustellen, das zumindest einen Teil der aus dem Stand der Technik bekannten Nachteile vermeidet, ökonomisch herstellbar ist und über besondere Filterleistungen verfügt, insbesondere über eine vergleichsweise hohe Abscheidungsleistung bei vergleichsweise geringem Luftwiderstand.

Die vorliegende Erfindung wird durch ein Filterelement mit den Merkmalen des beigefügten Anspruchs 1 gelöst. Eine Verwendung eines solchen Filterelements wird in Anspruch 12 angegeben. Vorteilhafte Ausführungsformen der vorliegenden Erfindung sind Gegenstand der Ansprüche 2 bis 11. Die der Erfindung zugrundeliegende Aufgabe wird weiterhin durch ein Verfahren gemäss Anspruch 13 gelöst.

Überraschenderweise hat sich gezeigt, daß ein Filterelement mit wenigstens einer Trägerschicht oder einer Trägerlage, die mit in einem elektrostatischen Spinnverfahren hergestellten Fasern mit einem Durchmesser im Bereich von 0,1 µm bis 20 µm beschichtet sind, über besondere Abscheidungsleistungen bei vergleichsweise niedrigem Luftwiderstand verfügen. Zumindest ergibt sich bei den erfindungsgemäßen Filterelementen im Vergleich zum Stand der Technik ein deutlich verringerter Luftwiderstand bei vergleichbarer Abscheidungsleistung. Es ist weiter bevorzugt, wenn diese Fasern einen Durchmesser im Bereich von 0,1 bis 5 µm und am stärksten bevorzugt einen Durchmesser im Bereich von 0,1 µm bis 2 µm aufweisen, was sich insbesondere günstig auf den Luftwidertand auswirkt.

Diese vorteilhaften Eigenschaften ergeben sich alleine aufgrund der in einem elektrostatischen Spinnverfahren hergestellten Fasern. Die Trägerschicht ist bevorzugt allgemein aus einem Spinnvlies oder einer Adsorberschicht gebildet. Derartige Spinnvliese und Adsorberschichten werden bereits im Filterbereich eingesetzt und stehen daher im Rahmen der vorliegenden Erfindung zur Verfügung. Hierbei sind vorteilhafterweise keine Veränderungen oder Anpassungen für die Beschichtung mit den in einem elektrostatischen Spinnverfahren hergestellten Fasern erforderlich.

Grundsätzlich kann jedoch jedes Material oder Substrat als Trägerschicht oder Trägerlage verwendet werden, solange es aufgrund seiner Beschaffenheit zum Einsatz in einem Filterelement geeignet ist. Als Material für die wenigstens eine Trägerschicht oder Trägerlage werden daher bevorzugt Spunbond-Materialien aus Polypropylen oder Polyester verwendet aber auch solche aus Polyamid oder anderen gebräuchlichen Fasern. Darüberhinaus eignen sich aber auch Schaumstoffe, Nadelvliese, Glas- oder Steinwolle als Trägermaterialien.

Wie bereits erwähnt wird die wenigstens eine Trägerschicht oder Trägerlage in einer besonders bevorzugten Ausführungsform der vorliegenden Erfindung von einer Adsorberschicht gebildet. Die in einem elektrostatischen Spinnverfahren hergestellten Fasern werden während oder unmittelbar nach ihrer Herstellung auf einer Adsorberschicht unter Vliesbildung abgelegt. Dies führt zu einer Gewichtsersparnis, da ein so gebildeter Kombifilter ohne das sonst übliche Trägermaterial auskommt.

Unabhängig von seiner Art besteht die wenigstens eine Trägerschicht oder Trägerlage bevorzugt aus einem luftdurchlässigen Material mit einem Flächengewicht zwischen 10 und 500 g/m², besonders bevorzugt zwischen 15 und 150 g/m², wobei bspw. bei einer Trägerschicht oder einer Trägerlage aus einer Adsorberschicht höhere Flächengewichte vertretbar sind als bei Trägerschichten aus einem Vlies, einer Netz- oder Gitterstruktur und dergl..

Eine besonders vorteilhafte Filterwirkung läßt sich mit dem erfindungsgemäßen Filterelement erzielen, wenn die Beschichtung aus dem in einem elektrostatischen Spinnverfahren hergestellten Fasern einen Gradienten in der Beschichtungsdichte aufweist, wobei die Fasermenge von der Anströmseite zu Abströmseite zunimmt, so daß ein Filterelement mit einer in der angegebenen Strömungsrichtung progressiven Faserdichte vorliegt. Aufgrund der günstigen Filtereigenschaften ist diese Ausführungsform der vorliegenden Erfindung besonders bevorzugt.

Die Filtercharakteristika des erfindungsgemäßen Filterelements lassen sich vorzugsweise dadurch weiter variieren oder verbessern, daß die wenigstens eine Trägerschicht oder Trägerlage beidseitig beschichtet ist. Hierbei ist es insbesondere möglich eine bipolare Beschichtung vorzunehmen. Hierbei werden die beiden Seiten der wenigstens einen Trägerschicht oder Trägerlage mit Fasern mit unterschiedlicher bzw. entgegengesetzter elektrischer Aufladung beschichtet.

Gemäss einer bevorzugten Ausführungsform eines Filterelementes weisen die Fasern auf den sich gegenüberliegenden Seiten der Trägerschicht oder Trägerlage eine entgegengesetzte elektrische Aufladung auf. Das heißt, die Fasern auf der Oberseite des Trägermaterials weisen eine entgegengesetzte Aufladung zu den Fasern auf der Unterseite des Trägermaterials auf.

Ein besonderer Vorzug des erfindungsgemäßen Verfahrens ist dabei, daß das elektrostatische Spinnverfahren das Einbringen von Ladungsträgern oder Ladungsstabilisatoren in die Fasern auf einfache Weise ermöglicht, wobei es insbesondere möglich ist Fasern zu schaffen, die ihre elektrostatische Aufladung dauerhaft oder zumindest über einen ausgedehnten Zeitraum beibehalten und nicht kurze Zeit nach der Aufladung verlieren. Dies ist z.B. dadurch möglich, daß man einer zur Herstellung des erfindungsgemäßen Filterelements verwendeten Polymerlösung oder Polymerschmelze vor dem Verspinnen in einem elektrostatischen Spinnverfahren eine oder mehrere oxidierbare Substanzen oder Substanzen mit einem π-Elektronensytem zusetzt, wie z.B. Substanzen aus der Gruppe der organischen Farbstoffe, deren Vorstufen oder Derivate, der Charge-Transfer-Komplexe, der Metallocene und der Phthalocyanine sowie der optischen Aufheller, wobei diese Substanzen insbesondere über wenigstens eine funktionelle Gruppe mit ladungsstabilisierenden Eigenschaften verfügt, insbesondere Amino-, Amido-, Imino-, Azo-, Nitro-, Carboxy-, Hydroxy-, Thio-, Sulfo- oder Halogenogruppen. Die Wirkung der vorstehenden Substanzen läßt sich dabei insbesondere dadurch steigern, daß das Verspinnen aus einer Lösung erfolgt und als Lösungsmittel insbesondere Butanol, Butanon, Acetonitril, Dimethylsulfoxid, Wasser, Dimethylformamid, Formamid, n-Methylformamid, Dichlormethan, Essigester, Aceton, Ethanol oder Ethylenglycol verwendet werden.

Erfindungsgemäß ist es weiterhin möglich, das bisher beschriebene Filterelement zusätzlich mit Adsorbens zu versehen, wobei nach Herstellung der Fasern der Beschichtung in einem elektrostatischen Spinnverfahren bzw. des Filterelements Adsorberpartikel auf das Filterelement aufgebracht oder in die auf die wenigstens eine Trägerschicht oder Trägerlage aufgebrachte Faserschicht eingebracht werden. Die Fixierung der Adsorberpartikel folgt dann auf eine dem Fachmann geläufige Weise, insbesondere z.B. durch Einsatz von Bindemitteln oder durch Kalandrieren.

Das erfindungsgemäße Filterelement wird gewöhnlicherweise so hergestellt, daß die wenigstens eine Trägerschicht oder Trägerlage an wenigstens einer Absprühelektrode einer Vorrichtung zum elektrostatischen Verspinnen von Polymerlösungen oder Polymerschmelzen vorbeigeführt wird. Hierbei verläuft die wenigstens eine Trägerschicht oder Trägerlage bspw. zwischen einer Absprühelektrode und einer entsprechenden Gegenelektrode durch das zwischen diesen Elektroden ausgebildete elektrische Feld und wird direkt mit den absprühenden Fasern beschichtet.

Es auch möglich, zwei Absprühelektroden als Gegenelektroden auszubilden, so daß eine beidseitige Beschichtung der wenigstens einen Trägerschicht oder Trägerlage mit Fasern unterschiedlicher Polarität erfolgt. Hierdurch wird eine bipolare Beschichtung der wenigstens einen Trägerschicht erhalten.

Darüberhinaus ist es möglich die wenigstens eine Trägerschicht unterhalb des Bereichs zwischen den Absprühelektroden oder zwischen der Absprühelektrode und der Gegenelektrode hindurchzuführen und die entstehenden Fasern auf dieser Trägerschicht abzulegen.

Dem Fachmann sind die genauen Ausgestaltungen des eingesetzten elektrostatischen Spinnverfahren geläufig und auch die Fixierung der so hergestellten Fasern auf der wenigstens einen Trägerschicht oder Trägerlage, wobei es aber bevorzugt ist, wenn die in dem elektrostatischen Spinnverfahren hergestellten Fasern in einem Zustand auf die wenigstens eine Trägerschicht treffen, in dem wenn sie eine gewisse Klebrigkeit besitzen, d.h. in einem Zustand, in dem sie noch Lösungsmittel enthalten und/oder noch nicht vollständig abgekühlt sind. Hierdurch ist ein weiterer Aufwand zur Fixierung mit Hilfe von Bindemitteln oder thermisch überflüssig, obwohl diese Möglichkeiten grundsätzlich auch bestehen.

Zur Herstellung des erfindungsgemäßen Filterelements sind grundsätzlich alle in einem elektrostatischen Spinnverfahren verspinnbaren Polymere geeignet. Als wasserlösliche Polymere sind z.B. Polyvinylalkohol, Polyvinylpyrrolidin, Polyethylenoxid und dessen Copolymere, Cellulosederivate, Stärke sowie Mischungen dieser Polymere zu nennen. Als in organischen Lösungsmittel lösliche Polymere sind z.B Polystyrol, Polycarbonat, Polyvinylchlorid, Polyacrylat, Polymethacrylat, Polyvinylacetat, Polyvinylacetal, Polyvinylether, Polyurethan, Polyamid, Polysulfon, Polyethersulfon, Polyacrylnitril, Cellulosederivate sowie Mischungen dieser Polymere anzuführen. Als besonders geeignete Thermoplaste, kommen bspw. Polyolefine, Polyester, Polyoxymethylen, Polychlortrifluorethylen, Polyphenylensulfid, Polyaryletherketon, Polyvinylidenfluorid sowie Mischungen dieser Polymere in Frage.

Die vorliegende Erfindung wird nachfolgend anhand von Ausführungsbeispielen und Vergleichsbeispielen näher erläutert, wobei die Erfindung nicht auf diese Ausführungsbeispiele beschränkt werden soll.

### Vergleichsbeispiel 1

Ein Filter mit einer Größe von 298 x 204 x 30 mm (L, B, H), mit einer Anströmfläche von 0,058 m² besitzt eine Filtermedienfläche von 0,38 m² und setzt sich aus 33 Falten mit einer Höhe von 28,5 mm und einem Faltenabstand von 9 mm zusammen. Dieses Filtermedium besteht aus einem polymeren Trägergewebe, vorzugsweise Polypropylen oder Polyester, auf dem ein Adsorbens wie z.B. Aktivkohle aufgebracht ist. Diese Adsorptionsschicht wird von einem Partikelfiltermaterial bedeckt, das ein Polypropylen-Spinnvlies mit einem Flächengewicht von 60 g/m² ist und elektrostatisch aufgeladen ist. Die damit erreichbare Abscheidungsrate liegt bei ca. 20 bis 30 % für die 0,3 - 0,5 µm Fraktion von NaCl als Meßaerosol. Gemessen wurde dabei bei einem Volumenstrom von 300 m³ pro Stunde und einem Druckverlust an dem Filter von 66 Pa bei 23 °C. Die Abscheideleistungen sind in Tabelle 1 im einzelnen angegeben.

### Beispiel 1

Das Partikelfiltermedium aus dem Vergleichsbeispiel 1 wird zusätzlich mit Nanofasem bipolar beschichtet. Das Beschichtungsgewicht beträgt 0,1 bis 2 g/m². Hierdurch läßt sich die Abscheidungsrate auf 50 bis 60 % steigern, wobei der Druckverlust nur um 2 Pa zunimmt. Einzelheiten zu den Abscheidungsleistungen sind in Tabelle 1 angegeben.

### Beispiel 2

Das Partikelfiltermedium aus Vergleichsbeispiel 1 wurde durch ein mit Nanofasem bipolar beschichtetes Spinnvlies ersetzt. Das Beschichtungsgewicht beträgt dabei 0,1 bis 2 g/m² und das Polypropylen-Trägermaterial besitzt ein Gewicht von 15 g/m².

Unter den gleichen Bedingungen wie in Vergleichsbeispiel 1 erhebt sich eine Abscheidungsrate von 30 bis 40 % für die 0,3 -0,5 µm Fraktion von NaCl als Meßaerosol. Wichtiger ist jedoch die Abnahme des Druckverlusts am Filter von 68 Pa auf 38 Pa, was zeigt, daß das erfindungsgemäße Filterpartikelmedium einen erheblich niedrigeren Luftwiderstand zeigt. Einzelheiten zur Abscheidungsleistung sind in der Tabelle 1 aufgeführt.

### Vergleichsbeispiel 2

Ein Filter mit einer Größe von 412 x 146 x 25 mm (L, B, H) besitzt eine Anströmfläche von 0,06 m². Die Filtermedienfläche beträgt 0,47 m² und setzt sich aus 69 Falten mit einer Höhe von 23,5 mm und einem Faltenabstand von 6 mm zusammen. Das Filtermedium besteht aus einem elektrostatisch aufgeladenen Polypropylen-Spinnvlies mit einem Flächengewicht von 140 g/m². Die mit diesem Filter erreichbare Abscheidungsrate liegt bei etwa 35 bis 45 % für die 0,3 - 0,5 µm Fraktion von NaCl als Meßaerosol. Gemessen wurde bei einem Volumenstrom von 300 µm pro Stunde und einer Medienfläche von 0,47 m², wobei ein Druckverlust am Filter von 50 Pa bei 23 °C zu verzeichnen war.

### Beispiel 3

Das Partikelfiltermedium aus Vergleichsbeispiel 2 wird durch ein mit Nanofasem bipolar beschichtetes Polypropylen-Spinnvlies ersetzt. Das Beschichtungsgewicht beträgt dabei 0,1 bis 2 g/m² und das Polypropylen-Spinnvlies weist ein Flächengewicht von 130 g/m² auf. Die Abscheidungsrate läßt sich auf 50 bis 70 % für die 0,3 bis 0,5 µm Fraktion von NaCl als Meßaerosol steigern, wobei der Druckverlust von 54 Pa auf 52 Pa abnimmt. Einzelheiten zur Abscheidungsrate sind in der Tabelle 1 angeführt.

### Beispiel 4

Das Partikelfiltermedium aus Vergleichsbeispiel 2 wird durch ein mit Nanofasem bipolar beschichtetes Polypropylen-Spinnvlies ersetzt, wobei die Beschichtungsmenge 0,1 bis 2 g/m² beträgt und das Spinnvlies ein Flächengewicht von 60 g/m² aufweist. Die Abscheidungsrate beträgt unter den Meßbedingungen wie in Vergleichsbeispiel 2 35 bis 55 % für die 0,3 - 0,5 µm Fraktion von NaCl als Meßaerosol. Gleichzeitig verringert sich der Druckverlust am Filter von 54 Pa auf 22 Pa gegenüber dem Vergleichbeispiel 2.

**Tabelle 1 Fraktionsabscheidegrad (Partikelgröße in µm) von NaCl und AC-Grob als Meßaerosol**

| **Filter aus** | **Druckabfall bei 300 m**^{**3**}**/Std. [Pa]** | **Abscheideleistung bei 300 m**^{**3**} **/Std.** | | | | | |
|---|---|---|---|---|---|---|---|
| | | **NaCl [%]** | | **AC-Grob [%]** | | | |
| | | **0,3 - 0,5 µm** | **0,5 - 1 µm** | **0,3 - 0,5 µm** | **0,5 - 1 µm** | **1-3 µm** | **3-5 µm** |
| Vgl.Bsp. 1 | 66 | 25 | 32 | 72 | 73 | 75 | 85 |
| Bsp. 1 | 68 | 53 | 60 | 94 | 96 | 97 | 99 |
| Bsp. 2 | 37 | 31 | 36 | 82 | 83 | 85 | 93 |
| | | | | | | | |
| Vgl. Bsp. 2 | 54 | 40 | 44 | 90 | 91 | 94 | 97 |
| Bsp. 3 | 52 | 60 | 65 | 96 | 96 | 98 | 99 |
| Bsp. 4 | 22 | 36 | 40 | 86 | 88 | 89 | 91 |

| | | | | | | | |
|---|---|---|---|---|---|---|---|
| Vgl. Bsp = Vergleichsbeispiel | | | | | | | |
| BSP = Beispiel | | | | | | | |

## Patentansprüche

1. Filterelement mit wenigstens einer Trägerschicht oder einer Trägerlage, die mit in einem elektrostatischen Spinnverfahren hergestellten Fasern beschichtet ist,
**dadurch gekennzeichnet,**
**daß** diese Fasern einen Durchmesser im Bereich von 0,1 µm bis 20 µm besitzen und daß die beiden Seiten der wenigstens einen Trägerschicht oder Trägerlage mit Fasern mit unterschiedlicher oder entgegengesetzter Aufladung beschichtet sind.

2. Filterelement gemäß Anspruch 1,
**dadurch gekennzeichnet,**
**daß** die wenigstens eine Trägerschicht aus einem Spinnvlies oder einer Adsorberschicht gebildet ist.

3. Filterelement gemäß einem der Ansprüche 1 oder 2,
**dadurch gekennzeichnet,**
**daß** die aus einem Spinnvlies oder aus Schaumstoff, einem Nadelvlies, Glas- oder Steinwolle gebildete Trägerschicht ein Flächengewicht von 10 bis 500 g/m² aufweist, insbesondere ein Flächengewicht von 15 bis 150 g/m².

4. Filterelement gemäß einem der vorhergehenden Ansprüche,
**dadurch gekennzeichnet,**
**daß** die Beschichtung aus den in einem elektrostatischen Spinnverfahren hergestellten Fasern einen Gradienten in der Beschichtungsdichte aufweist, wobei die Fasermenge von der Anströmseite zur Abströmseite zunimmt.

5. Filterelement gemäß einem der vorhergehenden Ansprüche,
**dadurch gekennzeichnet,**
**daß** in den hergestellten Fasern Ladungsträger oder Ladungsstabilisatoren enthalten sind.

6. Filterelement gemäß einem der vorhergehenden Ansprüche,
**dadurch gekennzeichnet,**
**daß** die wenigstens eine Trägerlage oder Trägerschicht beidseitig mit einer bipolaren Beschichtung versehen ist.

7. Filterelement gemäß einem der vorhergehenden Ansprüche,
**dadurch gekennzeichnet,**
**daß** die elektrostatische Aufladung der Fasern dauerhaft ist.

8. Filterelement gemäß einem der vorhergehenden Ansprüche,
**dadurch gekennzeichnet,**
**daß** die Beschichtung aus in einem elektrostatischen Spinnverfahren hergestellten Fasern mit einem Adsorbens versehen ist.

9. Filterelement gemäß einem der vorhergehenden Ansprüche,
**dadurch gekennzeichnet,**
**daß** die in einem elektrostatischen Spinnverfahren hergestellten Fasern einen Durchmesser im Bereich von 0,1 µm bis 5 µm besitzen, insbesondere von 0,1 bis 2 µm.

10. Filterelement gemäß einem der vorhergehenden Ansprüche,
**dadurch gekennzeichnet,**
**daß** einer zur Herstellung der Fasern in dem elektrostatischen Spinnverfahren verwendeten Polymerlösung oder Polymerschmelze eine oder mehrere oxidierbare Substanzen oder Substanzen mit einem π-Elektronensytem, vorzugsweise Substanzen aus der Gruppe der organischen Farbstoffe, deren Vorstufen oder Derivate, der Charge-Transfer-Komplexe, der Metallocene und der Phthalocyanine sowie der optischen Aufheller, wobei diese Substanzen über wenigstens eine funktionelle Gruppe mit ladungsstabilisierenden Eigenschaften verfügen vorzugsweise Amino-, Amido-, Imino-, Azo-, Nitro-, Carboxy-, Hydroxy-, Thio-, Sulfo- oder Halogenogruppen, vor dem Verspinnen zugesetzt wird, bzw. werden.

11. Filterelement gemäß Anspruch 10,
**dadurch gekennzeichnet,**
**daß** das Verspinnen aus einer Lösung erfolgt und als Lösungsmittel Butanol, Butanon, Acetonitril, Dimethylsulfoxid, Wasser, Dimethylformamid, Formamid, N-Methylformamid, Dichlormethan, Essigester, Aceton, Ethanol oder Ethylenglycol verwendet wird.

12. Verwendung eines Filterelements gemäß einem der vorhergehenden Ansprüche, in Kombination mit wenigstens einer weiteren Adsorber- oder Partikelschicht, insbesondere als Kabinenluftfilter.

13. Verfahren zur Herstellung eines Filterelementes gemäß einem der Ansprüche 1 bis 11,
**dadurch gekennzeichnet,**
**daß** eine Trägerschicht oder Trägerlage zur beidseitigen Beschichtung mit Fasern unterschiedlicher oder entgegengesetzter Aufladung in dem zwischen zwei als Gegenelektroden ausgebildeten Absprühelektroden gebildeten Bereich oder unterhalb davon durchgeführt wird.

## Claims

1. Filter element having at least one backing layer or ply coated with fibres produced in an electrostatic spinning process, **characterized in that** these fibres have a diameter in the range from 0.1 µm to 20 µm and **in that** the two sides of the at least one backing layer or ply are coated with fibres of differing or opposite charge.

2. Filter element according to Claim 1, **characterized in that** the at least one backing layer is formed of a spunbonded fibrous nonwoven web or of an adsorber layer.

3. Filter element according to Claim 1 or Claim 2, **characterized in that** the backing layer formed of a spunbonded fibrous nonwoven web or of foam, a needled fibrous nonwoven web, glass wool or rock wool has a basis weight in the range from 10 to 500 g/m² and especially a basis weight in the range from 15 to 150 g/m².

4. Filter element according to any one of the preceding claims, **characterized in that** the coating composed of the fibres produced in an electrostatic spinning process has a coating-density gradient **in that** the fibre quantity increases from the inflow side to the outflow side.

5. Filter element according to any one of the preceding claims, **characterized in that** the fibres produced contain charge carriers or charge stabilizers.

6. Filter element according to any one of the preceding claims, **characterized in that** the at least one backing ply or layer has been provided with a bipolar coating on both sides.

7. Filter element according to any one of the preceding claims, **characterized in that** the electrostatic charge on the fibres is durable.

8. Filter element according to any one of the preceding claims, **characterized in that** the coating composed of fibres produced in an electrostatic spinning process has been provided with an adsorbent.

9. Filter element according to any one of the preceding claims, **characterized in that** the fibres produced in an electrostatic spinning process have a diameter in the range from 0.1 µm to 5 µm and especially in the range from 0.1 to 2 µm.

10. Filter element according to any one of the preceding claims, **characterized in that** one or more oxidizable substances or substances having a π-electron system, preferably substances from the group of the organic dyes, their precursors or derivatives, the charge-transfer complexes, the metallocenes and the phthalocyanines and also the optical brighteners, these substances possessing at least one functional group having charge-stabilizing properties, preferably amino, amido, imino, azo, nitro, carboxyl, hydroxyl, thio, sulpho or halo groups, are added to the polymer solution or melt used for producing the fibres in the electrostatic spinning process, before spinning.

11. Filter element according to Claim 10, **characterized in that** spinning is effected from a solution and butanol, butanone, acetonitrile, dimethyl sulphoxide, water, dimethylformamide, formamide, N-methylformamide, dichloromethane, ethyl acetate, acetone, ethanol or ethylene glycol is used as solvent.

12. Use of a filter element according to any one of the preceding claims, in combination with at least one further adsorber or particle layer, as a cabin air filter in particular.

13. Process for producing a filter element according to any one of Claims 1 to 11, **characterized in that** a backing layer or ply is coated on both sides with fibres of differing or opposite charge by passing through or underneath the region formed between two spray electrodes configured as counter-electrodes.

## Revendications

1. Élément de filtrage comportant au moins une couche de support ou une nappe de support, qui est revêtue de fibres réalisées par un procédé de filage électrostatique, **caractérisé en ce que** ces fibres ont un diamètre dans une plage de 0,1 µm à 20 µm et **en ce que** les deux côtés de ladite au moins une couche de support ou nappe de support sont revêtues de fibres à charge différente ou opposée.

2. Élément de filtrage selon la revendication 1, **caractérisé en ce que** ladite au moins une couche de support est formée par un mat filé-lié ou une couche d'adsorbant.

3. Élément de filtrage selon la revendication 1 ou 2, **caractérisé en ce que** la couche de support, formée par un mat filé-lié ou une mousse, un non-tissé aiguilleté, la laine de verre ou la laine minérale, a un poids par unité de surface de 10 à 500 g/m², en particulier un poids par unité de surface de 15 à 150 g/m².

4. Élément de filtrage selon l'une quelconque des revendications précédentes, **caractérisé en ce que** le revêtement en fibres réalisées par un procédé de filage électrostatique a un gradient de densité du revêtement, la quantité de fibres augmentant depuis le côté d'entrée du flux vers le côté de sortie du flux.

5. Élément de filtrage selon l'une quelconque des revendications précédentes, **caractérisé en ce que** des porteurs de charge ou des stabilisateurs de charge sont contenus dans les fibres réalisées.

6. Élément de filtrage selon l'une quelconque des revendications précédentes, **caractérisé en ce que** ladite au moins une nappe de support ou couche de support est munie sur les deux faces d'un revêtement bipolaire.

7. Élément de filtrage selon l'une quelconque des revendications précédentes, **caractérisé en ce que** la charge électrostatique des fibres est permanente.

8. **Élément de filtrage selon l'une quelconque des revendications** précédentes, **caractérisé en ce que** le revêtement en fibres réalisées par un procédé de filage électrostatique contient un adsorbant.

9. Élément de filtrage selon l'une quelconque des revendications précédentes, **caractérisé en ce que** les fibres réalisées par un procédé de filage électrostatique ont un diamètre dans une plage de 0,1 µm à 5 µm, en particulier de 0,1 µm à 2 µm.

10. Élément de filtrage selon l'une quelconque des revendications précédentes, **caractérisé en ce qu'**une ou plusieurs substances oxydables ou substances avec un système d'électrons π, de préférence des substances issues du groupe des colorants organiques, du progéniteur ou des dérivés de ceux-ci, des complexes de charge-transfert, des métallocènes et des phthalocyanines, ainsi que des agents de blanchiment optiques, est ou sont ajoutée(s) avant le filage à la solution de polymère ou un polymère en fusion, utilisé pour la réalisation des fibres par un procédé de filage électrostatique, lesdites substances disposant d'au moins un groupe fonctionnel avec des propriétés de stabilisation de la charge, de préférence des groupes amino, imino, azo, nitro, carboxy, hydroxy, thio, sulfo ou halogéno.

11. Élément de filtrage selon la revendication 10, **caractérisé en ce que** le filage est réalisé à partir d'une solution et le solvant utilisé est le butanol, butanon, acétonitrile, diméthylsulfoxide, eau, diméthylformamide, formamide, N-méthylformamide, dichlométhane, éther acétique, acétone, éthanol ou éthylèneglycol.

12. Utilisation d'un élément de filtrage selon l'une quelconque des revendications précédentes, en combinaison avec au moins une couche supplémentaire d'adsorbant ou de particules, en particulier sous forme de filtre à air d'une cabine.

13. Procédé de réalisation d'un élément de filtrage selon l'une quelconque des revendications 1 à 11, **caractérisé en ce qu'**une couche de support ou nappe de support, en vue du revêtement des deux faces avec des fibres de charge différente ou opposée, est acheminée dans la zone formée entre deux électrodes consommables, conçues sous forme de contre-électrodes, ou est acheminée en dessous de ladite zone.
